Europäisches Patentamt

European Patent Office

Office européen des brevets

(19)

(11) Veröffentlichungsnummer: **0 113 654**
A2

(12) # EUROPÄISCHE PATENTANMELDUNG

(21) Anmeldenummer: 83890224.5

(22) Anmeldetag: 12.12.83

(51) Int. Cl.³: **E 21 C 7/08**
B 25 D 17/16

---

(30) Priorität: 07.01.83 AT 39/83

(43) Veröffentlichungstag der Anmeldung:
18.07.84 Patentblatt 84/29

(84) Benannte Vertragsstaaten:
BE CH DE FR GB IT LI LU NL SE

(71) Anmelder: VEREINIGTE EDELSTAHLWERKE
AKTIENGESELLSCHAFT (VEW)
Elisabethstrasse 12
A-1010 Wien(AT)

(72) Erfinder: Schantl, Werner

A-8661 Wartberg 71(AT)

(72) Erfinder: Meisenbichler, Karl
Wieden 108
A-8643 Allerheiligen/Mürztal(AT)

(74) Vertreter: Widtmann, Georg, Dr.
Vereinigte Edelstahlwerke Aktiengesellschaft (VEW)
Elisabethstrasse 12
A-1010 Wien(AT)

---

(54) Drehschlag-, Dreh- oder Schlagwerk.

(57) Drehschlag-, Dreh- oder Schlagwerk mit einem Gehäuse (1), in welchem eine Einsteckwerkzeug (4), insbesondere ein Einsteckstummel für ein Bohrgestänge od.dgl., einsteckbar und über einen Halteteil (3) in diesem haltbar ist, wobei das Einsteckwerkzeug (4) zumindest eine sacklochartige Längsausnehmung, insbesondere axiale Bohrung (6), aufweist, die an dem aus dem Gehäuse (1) weisenden Ende mündet, wobei das Einsteckwerkzeug (4) außerhalb des Gehäuses von einem am Gehäuse (1) festgelegten Spülkopf (9) umgeben ist, welcher gegenüber dem Einsteckwerkzeug (4) abgedichtet ist, und der zur Zufuhr von einem, insbesondere flüssigen, Spülmedium über eine radiale Ausnehmung (7) in das Einsteckwerkzeug (4) dient, wobei der Spülkopf (9) zumindest eine Gleit- und Wälzfläche (21) aufweist, die zumindest mit einer weiteren Gleit- und Wälzfläche (22) zusammenwirkt, welche in axialer Richtung des Einsteckwerkzeuges (4) über Federn (24) gegeneinandergehalten, insbesondere -gedrückt sind, und in Richtung vom Gehäuse (1) die axiale Beweglichkeit des Spülkopfes (9) über einen mit dem Gehäuse verbundenen Anschlag (25, 30) begrenzt ist.

./...

EP 0 113 654 A2

Fig. 1

## Drehschlag-, Dreh- oder Schlagwerk

Die Erfindung bezieht sich auf ein Drehschlag-, Dreh- oder Schlagwerk mit einem Gehäuse, in welchem ein Einsteckwerkzeug einsteckbar ist.

Für das Bohren, sei es das schlagende, drehende oder schlagdrehende, ist es von besonders hohem Vorteil, wenn das Bohrklein durch ein Spülmedium insbesondere Spülflüssigkeit, z.B. Spülwasser, aus dem Bohrloch ausgetragen wird. Dadurch wird verhindert, daß das Bohrklein über die Schneiden des Bohrwerkzeuges weiter zerkleinert werden, sodaß damit einerseits eine unnötige Abnützung der Schneiden, z.B. der Hartmetalleinsätze, erfolgt, und anderseits Energie zum Zerkleinern des Bohrkleins aufgewandt wird, welche zum Vortrieb des Bohrloches dienen sollte.

Das Spülmedium kann entweder von außen dem Bohrloch zugeführt werden, wobei es zu Stauungen des Spülmediums im Bohrloch kommen kann. Die andere weit häufiger geübte Möglichkeit besteht darin, daß das Spülmedium über das Werkzeug zugeführt wird. Hiefür ist eine axiale Ausnehmung, Bohrung od. dgl. im Werkzeug vorgesehen, die bis zur Krone des Werkzeuges führt, wobei am anderen Ende das Spülmedium zugeführt wird. Es besteht nun die Möglichkeit, daß das Spülmedium direkt am anderen Ende, d.h. an jenem Ende, an welchem sich nicht die Bohrkrone befindet, eingeleitet wird. Dazu muß, falls das Einsteckwerkzeug direkt im Bohrwerk angetrieben wird, die Zufuhr des Spülmediums im Bohrwerk erfolgen. Das heißt, im Bohrwerk muß neben der Übertragung einer drehenden, schlagenden und/oder drehschlagenden Bewegung eine fluiddichte Verbindung zwischen der Zuleitung für das Spülmedium und dem Einsteckende des betreffenden Einsteckwerkzeuges, z.B. Einsteckstummels, erzeugt werden. Auf Grund der Dimensionen des Einsteckwerkzeuges und des Bohrwerkes, das insbesondere beim Untertagebau besonders kompakt gehalten sein muß, kann nur mit relativ geringem Druck, z.B. bis 6 bar, beim Spülmedium gearbeitet werden. Das Spülmedium wird hiebei über ein Spülrohr durch den Schlagkolben dem Einsteckende des Einsteckstummels od.dgl. zugeführt. Neben der relativ aufwendigen Konstruktion des Bohrwerkes ist die Wartungsarbeit, z.B. beim Austauschen der Dichtungen im Bohrwerk, besonders aufwendig, da dasselbe teilweise zerlegt werden muß, um die neuen Dichtungen einzubauen.

Aus oben angeführtem Grund wurde bereits vorgeschlagen, die Zuführung des Druckmediums außerhalb des Bohrwerkes vorzusehen. Hiezu wird ein Einsteckwerkzeug verwendet, das eine axiale Sackbohrung aufweist, in welche eine radiale Bohrung mündet. Diese radiale Bohrung ist von einer Muffe umgeben. Diese Muffe weist ringförmige Dichtkörper auf, die die Muffe gegenüber dem Einsteckwerkzeug abdichten. Der Ringraum ist über einen Einschraubnippel mit dem Zuleitungsschlauch für das Spülmedium verbunden. Um den Spülkopf in seiner Lage zu sichern, ist dieser mit einer Lasche mit dem Gehäuse des Bohrwerkes starr verbunden. Es hat sich nun herausgestellt, daß eine derartige Konstruktion nur bei vollkommen neuen Einsteckwerkzeugen funktioniert. Sind die Einsteckwerkzeuge auch nur geringfügig exzentrisch, z.B. wenn beim Bohren Kippmomente auf den Bohrer aufgebracht werden, so führt das Einsteckwerkzeug eine Präzisionsbewegung durch, die eine vorzeitige Zerstörung der Dichtungen, gegebenenfalls auch der Aufhängung des Spülkopfes, bedingt.

Die Aufgabe der vorliegenden Erfindung besteht nun darin, ein Drehschlag-, Dreh- oder Schlagwerk zu schaffen, bei welchem dem Einsteckwerkzeug außerhalb des Bohrwerkes ein Spülmedium zugeführt werden kann, wobei der Spülkopf, welcher für die Zufuhr desselben dient, leicht zu warten ist und auch die einzelnen Konstruktionselemente selbst bei stark exzentrischem Einsteckwerkzeug eine hohe Lebensdauer aufweisen.

Das erfindungsgemäße Drehschlag-, Dreh- oder Schlagwerk mit einem Gehäuse, in welchem ein Einsteckwerkzeug, insbesondere ein Einsteckstummel für ein Bohrgestänge od.dgl., einsteckbar und über einen Halteteil in diesem gehalten ist, wobei das Einsteckwerkzeug zumindest eine sacklochartige Längsausnehmung, insbesondere axiale Bohrung, aufweist, die an dem aus dem Gehäuse weisenden Ende mündet, wobei das Einsteckwerkzeug außerhalb des Gehäuses von einem am Gehäuse festgelegten Spülkopf umgeben ist, welcher gegenüber dem Einsteckwerkzeug abgedichtet ist, der zur Zufuhr von einem, insbesondere flüssigen, Spülmedium über eine radiale Ausnehmung in das Einsteckwerkzeug dient, besteht im wesentlichen darin, daß der Spülkopf zumindest eine Gleit- und Wälzfläche aufweist, die zumindest mit einer weiteren Gleit- und Wälzfläche zusammenwirkt, welche in axialer Richtung des Einsteckwerkzeuges über Federn gegeneinandergehalten, insbesondere -gedrückt sind, und daß in Richtung vom Gehäuse die axiale Beweglichkeit des Spülkopfes über einen mit dem Gehäuse verbundenen Anschlag begrenzt ist. Durch eine derartige Konstruktion wird erreicht, daß der Spülkopf die Präzisionsbewegungen des Einsteckwerkzeuges mitausführen kann, wobei anderseits die Lage desselben gegenüber dem Gehäuse des Bohrwerkes soweit festgelegt ist, daß der Spülkopf keine zusätzlichen Bewegungen, z.B. Vibrationen, Schwingungen od.dgl., ausführt. Weiters weist eine derartige Konstruktion eine hohe Lebensdauer auf.

Sind die weiteren Gleit- und Wälzflächen auf der Stirnfläche eines Prismas, insbesondere eines Zylinders, vorgesehen, der das Einsteckwerkzeug umgibt und am Gehäuse abgestützt ist, so können die Gleit- und Wälzflächen eine besonders hohe Oberflächengüte aufweisen, wobei gleichzeitig durch geeignete Materialwahl ein besonders geringer Verschleiß gegeben ist. Zum Beispiel kann ohne großen Aufwand der Zylinder, z.B. ein Ring, wärmebehandelt werden, wodurch die Härte der Gleit- und Wälzfläche so eingestellt werden kann, daß der Verschleiß nicht am Spülkopf sondern am relativ einfach ausgestalteten prismenförmigen Teil erfolgt.

Ist das Prisma, insbesondere der Zylinder, über Federn, vorzugsweise Tellerfedern, am Gehäuse abgestützt, so kann mit besonders hohen Kräften der Zylinder gegen den Spülkopf gedrückt werden, wobei gleichzeitig eine möglichst einheitliche Belastung der Federn erreichbar ist.

Weisen, insbesondere die weiteren, Gleit- und Wälzflächen Nuten auf, so wird auf besonders sichere Weise verhindert, daß Leckage des Spülmediums in das Bohrwerk eintreten kann. Eine derartige Leckage des Spülmediums ist ein gezielt auftretender Flüssigkeitsverlust, da durch den zwischen der Dichtung und dem Einsteckwerkzeug befindlichen Flüssigkeitsfilm eine vorzeitige Abnützung der Dichtungen vermeidbar ist.

Ist der Spülkopf mit einer Gewindekappe am Gehäuse oder am Halteteil für das Einsteckwerkzeug gehalten, so kann die Gewindekappe die Gleit- und Wälzflächen und gegebenenfalls die Federn abdecken, sodaß eine Verschmutzung sowohl der Federn als auch der zusammenwirkenden Flächen leicht vermieden werden kann.

Weist der Anschlag für den Spülkopf gleichzeitig eine Verdrehsicherung auf, so ist eine besonders kompakte Konstruktion gegeben.

Eine besonders einfach herzustellende konstruktive Lösung ergibt sich dann, wenn eine der Gleit- und Wälzflächen zumindest einen Ringteil aufweist, der im wesentlichen normal zur Achse angeordnet ist, welcher mit einer analogen Teilfläche der anderen Gleit- und Wälzfläche zusammenwirkt, wobei an den Ringteil eine sphärische oder kegelige Fläche anschließt.

Werden besonders hohe Beanspruchungen, und zwar Kippbeanspruchungen, auf das Einsteckwerkzeug aufgebracht, so hat es sich als besonders vorteilhaft erwiesen, wenn die Gleit- und Wälzflächen sphärisch ausgebildet sind.

Im folgenden wird die Erfindung an Hand der Beispiele näher erläutert; es zeigen

Fig. 1 ein Einsteckwerkzeug mit Spülkopf und Bohrwerk, teilweise im Schnitt, wobei der Spülkopf über eine Gewindekappe mit dem Gehäuse verbunden ist,

Fig. 2 eine Verbindung des Spülkopfes mit dem Gehäuse über Schraubbolzen,

Fig. 3 eine weitere Ausführungsform, wobei sphärische Gleit- und Wälzflächen vorgesehen sind, und

Fig. 4 einen Ring in Draufsicht.

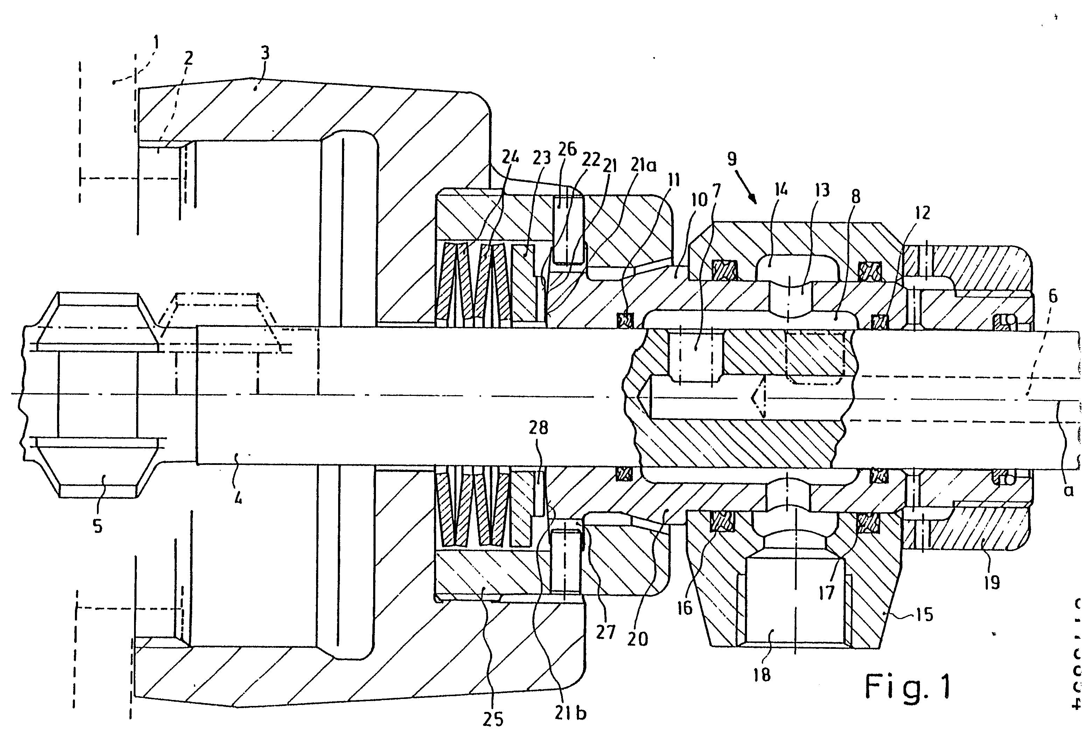

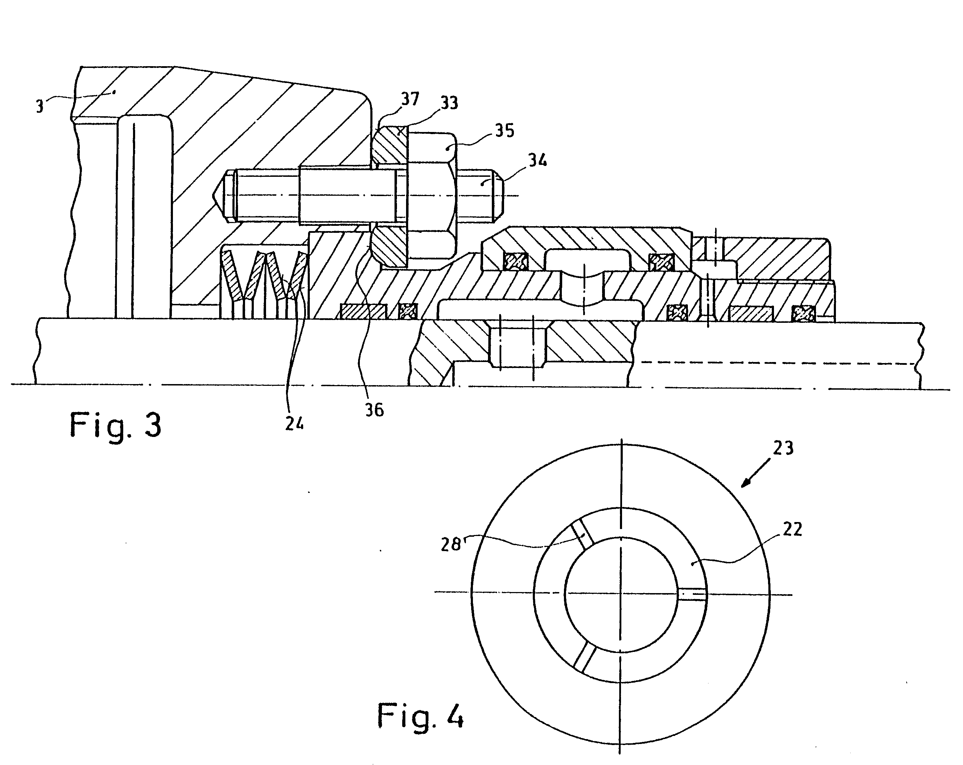

Bei dem in Fig. 1 dargestellten Bohrwerk ist das Gehäuse 1 desselben lediglich strichliert dargestellt. Das Gehäuse 1 weist einen Gewindeteil 2 auf, auf welchen eine Gewindekappe 3 aufgeschraubt ist. Diese Gewindekappe 3 hält das Einsteckwerkzeug 4, in diesem Fall einen Einsteckstummel, im Bohrwerk. Der Einsteckstummel weist Flügel 5 auf, welche zur Übertragung der Drehbewegung zwischen Bohrwerk und Einsteckstummel dienen. Am anderen Ende weist der Einsteckstummel ein nicht dargestelltes Seilgewinde auf, welches zur Kooperation mit einem Bohrgestänge dient. Weiters ist eine axiale Bohrung 6 vorgesehen, die sacklochartig ausgebildet ist, in welche eine radiale Ausnehmung 7 mündet. Diese radiale Ausnehmung 7 mündet ihrerseits in den Ringraum 8, der durch den Spülkopf 9 um das Einsteckwerkzeug gebildet wird. Der Spülkopf besteht seinerseits aus einem Zuleitungsstück 10, das gegenüber dem Einsteckstummel über O-Ring-Dichtungen 11, 12 abgedichtet wird. Das Zuleitungsstück weist selbst weitere Bohrungen 13 auf, die in den ringförmigen Raum 14 des Ringstückes 15 münden. Der ringförmige Raum 14 ist seinerseits erneut über Dichtungen 16, 17 gegenüber dem Zuleitungsstück 10 abgedichtet. Das Ringstück 15 weist weiters einen Gewindeanschluß 18 auf, in welchem ein Gewindenippel für den Anschluß des Schlauches des Spülmittels anschließbar ist. Das Ringstück 15 ist über eine Mutter 19 am Zuleitungsstück 10 lagefixiert und wird gegen den ringförmigen Ansatz 20 gepreßt. Die Mutter weist ein Sägegewinde auf, sodaß eine Selbstfixierung gegeben ist. Der Spülkopf, und zwar das Zuleitungsstück 10, weist an seinem zum Gehäuse weisenden Ende eine Gleit- und Wälzfläche 21 auf, die mit einer weiteren Gleit- und Wälzfläche 22 des Ringes 23 kooperiert. Der Ring 23 wird über Tellerfedern 24 gegen den Spülkopf 9, und zwar gegen das Zuleitungsstück 10 über die Gleit- und Wälzflächen 21 gepreßt. Über die Gewindekappe 25 wird der Spülkopf in seiner axialen Beweglichkeit begrenzt, sodaß diese als Anschlag dient. Dieser Anschlag 25 weist Paßstifte 26 auf, die in Nuten 27 des Zuleitungsstückes 10 eingreifen, wodurch dieses gegen Verdrehung gesichert ist. Die Gleitflächen des Ringes 23 weisen, wie in Fig. 4 ersichtlich, in welcher die Scheibe in Draufsicht dargestellt ist, Nuten 28 auf, durch welche die Gleit- und Wälzfläche 22 unterteilt ist. Die Gleit- und Wälzfläche 21 des Zuleitungsstückes 10 weist einen ringförmigen Teil 21a auf, welcher sich im wesentlichen normal zur Achse a des Einsteckwerkzeuges erstreckt, der stetig in einen kegelförmigen Teil 21b übergeht. Die Scheibe 23 weist lediglich eine im wesentlichen normal zur Achse a sich erstreckende ringförmige Gleit- und Wälzfläche 22 auf. Ist die Achse des Einsteckwerkzeuges mit der geometrischen Achse des Einsteckwerkzeuges identisch, so kann, gleichgültig ob eine rotierende oder schlagende Bewegung des Werkzeuges ausgeführt wird, eine Kooperation des jeweils planen ringförmigen Teiles der Gleit- und Wälzflächen 21 bzw. 22 erfolgen. Die Flächen werden hiebei über die Tellerfedern 24, durch welche sehr hohe Flächendrücke aufgebracht werden können, gegeneinandergepreßt. Stimmt nun die reale Achse mit der geometrischen Achse des Ein-

steckwerkzeuges nicht mehr überein und führt dadurch das Einsteckwerkzeug eine Taumelbewegung, insbesondere eine Präzisionsbewegung durch, so kommt die kegelige Fläche 21b des Zuleitungsstückes 10 während der Rotations- oder der Schlagbewegung teilweise an der weiteren Gleit- und Wälzfläche 21 des Ringes 23 zum Anliegen. Es wird somit durch diese Konstruktion einerseits die exakte Positionierung des Spülkopfes gegenüber dem Gehäuse erreicht, wobei anderseits eine begrenzte Beweglichkeit erhalten wird und durch diese jedoch keine Eigenbewegungen, Schwingungen od.dgl. des Spülkopfes bedingt bzw. erlaubt werden.

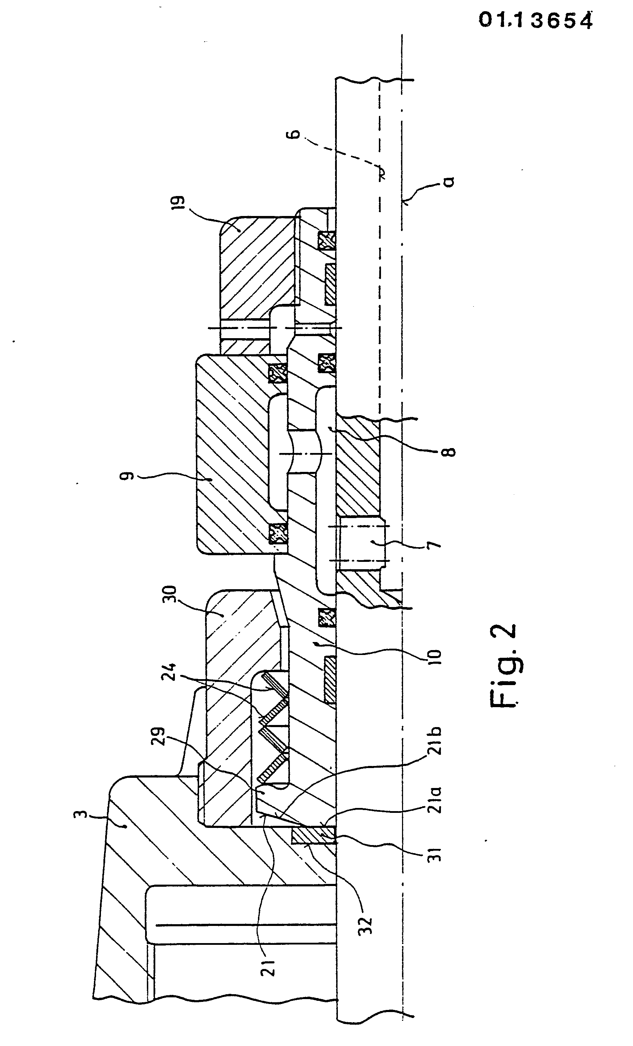

Bei der in Fig. 2 dargestellten Ausführungsform greifen die Tellerfedern 24 an einem Ende 29 des Zuleitungsstückes 10 an. Die Tellerfedern stützen sich hiebei auf der Gewindekappe 30 ab und drücken somit die Gleit- und Wälzfläche 21 gegen einen ringförmigen Einsatz 31, der im Halteteil 3 in einer Ausnehmung 32 angeordnet ist. Dieser ringförmige Einsatz ist aus einem härtbaren Material ausgebildet. Besonders deutlich ist die Aufgliederung der Gleit- und Wälzflächen in einen ringförmigen Teil 21a und einen kegelförmigen Teil 21b ersichtlich.

Bei der Ausführungsform gemäß Fig. 3 wird der Spülkopf über Tellerfedern 24 gegen einen Ring 33 gepreßt. Der Ring 33 ist über Schraubbolzen 34 und Mutter 35 am Gehäuse bzw. der Gewindekappe 3 gehalten. Der Spülkopf weist sphärisch gekrümmte Gleit- und Wälzflächen 36 auf, die zum Bohrloch weisen. Diese sphärisch gekrümmten Gleit- und Wälzflächen kooperieren mit sphärischen Gleit- und Wälzflächen 37 des Ringes 33. Auch durch eine derartige Konstruktion ist eine sichere Fixierung des Spülkopfes bei gleichzeitiger beschränkter Beweglichkeit desselben gegeben.

Patentansprüche :

1. Drehschlag-, Dreh- oder Schlagwerk mit einem Gehäuse (1) in welchem ein Einsteckwerkzeug (4), insbesondere ein Einsteckstummel für ein Bohrgestänge od.dgl., einsteckbar und über einen Halteteil (3) in diesem haltbar ist, wobei das Einsteckwerkzeug (4) zumindest eine sacklochartige Längsausnehmung, insbesondere axiale Bohrung (6), aufweist, die an dem aus dem Gehäuse (1) weisenden Ende mündet, wobei das Einsteckwerkzeug (4) außerhalb des Gehäuses von einem am Gehäuse (1) festgelegten Spülkopf (9) umgeben ist, welcher gegenüber dem Einsteckwerkzeug (4) abgedichtet ist, und der zur Zufuhr von einem, insbesondere flüssigen, Spülmedium über eine radiale Ausnehmung (7) in das Einsteckwerkzeug (4) dient, dadurch gekennzeichnet, daß der Spülkopf (9) zumindest eine Gleit- und Wälzfläche (21) aufweist, die zumindest mit einer weiteren Gleit- und Wälzfläche (22) zusammenwirkt, welche in axialer Richtung des Einsteckwerkzeuges (4) über Federn (24) gegeneinandergehalten, insbesondere -gedrückt sind, und in Richtung vom Gehäuse (1) die axiale Beweglichkeit des Spülkopfes (9) über einen mit dem Gehäuse verbundenen Anschlag (25, 30) begrenzt ist.

2. Drehschlag-, Dreh- oder Schlagwerk nach Anspruch 1, dadurch gekennzeichnet, daß die weitere Gleit- und Wälzfläche (22) auf der Stirnfläche eines Prismas, insbesondere eines Zylinders (32) vorgesehen ist, der das Einsteckwerkzeug (4) umgibt und am Gehäuse (1) abgestützt ist.

3. Drehschlag-, Dreh- oder Schlagwerk nach Anspruch 1 oder 2, dadurch gekennzeichnet, daß das Prisma, insbesondere der Zylinder (23), über Federn, insbesondere Tellerfedern (24), am Gehäuse (1, 3) abgestützt ist.

4. Drehschlag-, Dreh- oder Schlagwerk nach einem der Ansprüche 1, 2 oder 3, dadurch gekennzeichnet, daß das Prisma, insbesondere der Zylinder (32, 23), am Gehäuse (1) direkt oder indirekt anliegt.

5. Drehschlag-, Dreh- oder Schlagwerk nach einem der Ansprüche 1 bis 4, dadurch gekennzeichnet, daß, insbesondere die weiteren, Gleit- und Wälzflächen Nuten (27) aufweisen.

6. Drehschlag-, Dreh- oder Schlagwerk nach einem der Ansprüche 1 bis 5, dadurch gekennzeichnet, daß der Spülkopf (9) mit einer Gewindekappe (25) am Gehäuse (1) oder am Halteteil (3) für das Einsteckwerkzeug gehalten ist.

7. Drehschlag-, Dreh- oder Schlagwerk nach einem der Ansprüche 1 bis 6, dadurch gekennzeichnet, daß der Anschlag (25) eine Verdrehsicherung (26) aufweist.

8. Drehschlag-, Dreh- oder Schlagwerk nach einem der Ansprüche 1 bis 7, dadurch gekennzeichnet, daß eine der Gleit- und Wälzflächen zumindest einen Ringteil (21a), der im wesentlichen normal zur Achse (a) angeordnet ist, aufweist, der mit einer analogen Teilfläche (22) zusammenwirkt, wobei an den Ringteil (21a) eine sphärische oder kegelige Fläche (21b) anschließt.

9. Drehschlag-, Dreh- oder Schlagwerk nach einem der Ansprüche 1 bis 8, dadurch gekennzeichnet, daß die Gleit- und Wälzflächen (36, 37) sphärisch ausgebildet sind.

Fig. 1

Fig. 2

Fig. 3

Fig. 4